# EUROPEAN PATENT SPECIFICATION

(11) **EP 2 543 747 B1**
(45) Date of publication and mention of the grant of the patent: **14.06.2017**
(21) Application number: 11750784.8
(22) Date of filing: 03.03.2011
(51) Int. Cl.: C22C 38/04, C22C 38/58, C21D 9/08

(54) **SEAMLESS STEEL PIPE FOR HIGH-STRENGTH HOLLOW SPRING**
NAHTLOSES STAHLROHR FüR EINER HOCHFESTEN HOHLFEDER
TUBE D'ACIER SANS SOUDURE POUR RESSORT CREUX HAUTE RÉSISTANCE

(30) Priority: 04.03.2010 JP 2010047648
(43) Date of publication of application: 09.01.2013
(73) Proprietor: Kabushiki Kaisha Kobe Seiko Sho, Chuo-ku Kobe-shi Hyogo 651-8585 (JP)
(72) Inventor: KOCHI Takuya, Kobe-shi, Hyogo 651-2271 (JP); HATANO Hitoshi, Kobe-shi, Hyogo 651-2271 (JP); TOYOTAKE Kotaro, Kita-Kyushu-shi, Fukuoka 800-0007 (JP)
(74) Representative: Müller-Boré & Partner Patentanwälte PartG mbB
(86) International application number: PCT/JP2011/054986
(87) International publication number: WO 2011/108675

(56) References cited:
- EP-A1- 2 434 028
- WO-A1-2008/111200
- WO-A1-2010/131754
- JP-A- H01 247 532
- JP-A- 2007 127 227

## Description

The present invention relates to a seamless steel pipe for a high-strength hollow spring, and relates especially to a seamless steel pipe with a high quality suitable to manufacturing of a hollow shape suspension spring and the like used for automobiles.

Although a coil spring is formed by winding a solid raw wire in general, the idea of using a hollow raw wire that is a tubular one in order to reduce the weight has been known from long ago as has been already proposed in the Patent Literature 1 and the like, however because manufacturing thereof was difficult and the market needs in the past were not so strong, it was not put in practical use.

On the other hand, in recent years, the needs for weight reduction of a variety of vehicles mainly of automobiles are further increasing, and weight reduction of the total vehicle body is placed as a theme which is indispensable farther into the future from a viewpoint of reducing energy consumption not only in a gasoline-fueled vehicle which is subject to emission restrictions but also in an electric-powered vehicle having a high degree of expectation in the future. Accordingly, the technology for hollowing a suspension spring which is a main component of a suspension is getting much attention again, and full-fledged development work aiming its practical use is currently going on.

In the meantime, the hollow suspension spring is produced by hot- or cold-forming of a spring using a raw material of a steel pipe (may referred to also simply as a pipe) with a small diameter of approximately 16 mm, then performing heat treatment such as quenching, tempering and the like, and finally performing setting, shot peening and the like, however because the steel pipe that becomes a raw material largely affects the property of the suspension spring, it is important to maintain and improve the quality of this raw material steel pipe.

In the beginning, from the aspect of the manufacturing cost, an electro-resistance-welded tube (welded tube) was studied as the raw material pipe for a hollow spring, however it was found out that the spring steel (JIS G 4801) was not suitable for manufacturing of the welded tube in which pipe-making and welding steps were indispensable because the spring steel was a high-C steel generally containing C by 0.5% or more and also contains alloy elements such as Si, Mn and the like, and application of a seamless steel pipe has come to be studied.

With respect to the manufacturing method for a seamless steel pipe, it is common that a billet is hot-worked by a hot rolling method called a Mannesmann method that requires a special piercing step (Mannesmann piercing) or by a hot extrusion method not requiring such piercing step and is then cold-worked to obtain a steel pipe of a product size, and a technology described in the Patent Literature 2 is proposed as a technology that is premised on adoption of the former Mannesmann method. According to the technology, the workability is improved while securing a certain level of quality by stipulating a heating temperature condition before Mannesmann piercing and an intermediate heat treatment condition, however there were such problems that workability was inferior, manufacturing of a high-strength steel pipe was difficult because it was premised on the use of the raw material capable of piercing described above, and the surface flaw was generated on the inner peripheral surface of the steel pipe.

In order to get rid of these problems, technologies using the latter hot extrusion method have been proposed in the Patent Literatures 3 and 4. Both of the technologies disclosed in both the literatures adopt hydrostatic extrusion as the hot extrusion method.

However, the strength level of the hollow spring whose raw material is a seamless steel pipe obtained according to these related arts remains 1,100 MPa class at most, and development of a seamless steel pipe for a hollow spring having higher strength and excellent durability has been desired in order to further reduce the weight.

[Patent Literature 1] Japanese Examined Patent Application Publication No. S58-137666
[Patent Literature 2] Japanese Patent No. 2512984
[Patent Literature 3] Japanese Unexamined Patent Application Publication No. 2007-125588
[Patent Literature 4] Japanese Unexamined Patent Application Publication No. 2007-127227

Further, EP 2 434 028 A1, which is prior art according to Art. 54(3) EPC, discloses a hollow seamless pipe for high-strength springs, which is composed of a steel material comprising 0.2 to 0.7 mass% of C, 0.5 to 3 mass% of Si, 0.1 to 2 mass% of Mn, more than 0 mass% and 0.1 mass% or less of Al, more than 0 mass% and 0.02 mass% or less of P, more than 0 mass% and 0.02 mass% or less of S, and more than 0 mass% and 0.02 mass% or less of N, wherein the C content in an inner peripheral surface and outer peripheral surface of the hollow seamless pipe is 0.10 mass% or more, and a thickness of a whole decarburized layer in each of the inner peripheral surface and the outer peripheral surface is 200 µm or less.

The present invention has been developed in view of the technical background described above, and its object is to provide a seamless steel pipe with a high quality capable of manufacturing a hollow spring having high strength and excellent durability.

In the present invention, a seamless steel pipe for a high-strength hollow spring with the following gists is hereby proposed as a means for solving the problems described above. (1) A seamless steel pipe for a high-strength hollow spring including 0.20 to 0.70 mass% of C, 0.5 to 3.0 mass% of Si, 0.1 to 3.0 mass% of Mn, 0.030 mass% or less (including 0%) of P, 0.030 mass% or less (including 0%) of S, 0.02 mass% or less (including 0%) of N, and optionally one element or more selected from a group consisting of 3.0 mass% or less (not including 0%, hereinafter the same) of Cr, 0.0150 mass% or less of B, 0.10 mass% or less of Al, 1.0 mass% or less of V, 0.30 mass% or less of Ti, 0.30 mass% or less of Nb, 3.0 mass% or less of Ni, 3.0 mass% or less of Cu, 2.0 mass% or less of Mo, 0.0050 mass% or less of Ca, 0.0050 mass% or less of Mg, 0.020 mass% or less of REM, 0.10 mass% or less of Zr, 0.10 mass% or less of Ta, and 0.10 mass% or less of Hf, with the remainder being Fe and unavoidable impurities, wherein carbide has an equivalent circle diameter of 1.00 µm or less.

According to the present invention, a seamless steel pipe of a high quality capable of manufacturing a hollow spring having high strength of 1,150 MPa class or more and excellent durability can be provided.

Also, according to the present invention, hollowing of suspension parts such as a suspension spring can be promoted, and the weight of vehicles such as an automobile and the like can be further reduced.

The present inventors watched the fact that there was a limit in improving the strength of the seamless steel pipe obtained even in the technologies disclosed in the Patent Literatures 3 and 4 described in the Background Art, and carried out intensive studies on this problem. As a result, it was found out that the cause of hindering high strengthening in the related art was coarse carbide that was present in the metal structure of the steel pipe.

That is, according to the related art of the Patent Literatures 3 and 4, in the manufacturing process of the seamless steel pipe, the heat treatment of heating raw material at 650-750°C for softening (refer to the heating steps (D), (H) described in the paragraphs [0060], [0063] in the Patent Literature 3 and the paragraphs [0031], [0039] in the Patent Literature 4) that is so-called spheroidizing annealing is performed repeatedly in order to secure the workability thereof. Therefore, the structure of the steel pipe manufactured includes coarsened carbide. Also, a quenching treatment is performed in the manufacturing step of the hollow spring using the steel pipe as the raw material, however it was found out that the coarsened carbide was not fully solid-resolved, remained unresolved, lowered the hardness of the spring, and hindered high strengthening as described above.

Particularly, in recent years, in quenching treatment of a spring steel, there is a tendency to adopt rapid heating such as high frequency heating from a viewpoint of improving the spring property by preventing decarburization in heating and miniaturizing a prior austenite grain size to shorten the heating time, and therefore a residue of unresolved coarse carbide in steel comes to appear conspicuously under the condition of such quenching treatment.

Further, according to the related art of the Patent Literatures 3 and 4 also, the carbide can be fully solid-resolved by raising the heating temperature in the condition of the quenching treatment, however in such a case, the austenite grain size is coarsened and the problem of deterioration of the fatigue property of the spring occurs, which is not preferable.

Based on the knowledge, research and experiments were further carried out on suitable conditions allowing solid solution of the carbide and suppressing coarsening of the austenite grain size in steel of the seamless steel pipe, it was confirmed that a seamless steel pipe capable of manufacturing a hollow spring having high strength and excellent durability that were the object could be provided by controlling the size of the carbide in the metal structure of the steel pipe to a constant value or below, and the present invention was completed.

Below, the contents of the present invention will be described with respect to the metal structure, composition, and examples of the seamless steel pipe of the present invention in this order.

### [1] Metal structure of the present steel pipe

### (1) 1.00 µm or less of carbide size in terms of an equivalent circle

In the present invention, it is a large feature that the size of carbide (M₃C, M₇C₃, M₂₃C₆ and the like) of the metal element such as cementite (Fe₃C) and the like present in the metal structure of the seamless steel pipe is 1.00 µm or less in terms of an equivalent circle. Also, the carbide of the metal element here means the cementite described above to begin with, carbide of Mn, Cr, V, Ti, Nb, Ta, Hf and the like for example and composite carbide thereof, carbide containing Fe at a part of said carbide and composite carbide, and the like. By thus making the size of the carbide in the structure 1.00 µm or less, the carbide can be quickly and fully solid-resolved and coarsening of the austenite grain size can be suppressed so as to be remained small at 20 µm or less in the quenching treatment in manufacturing the hollow spring. As a result, a hollow spring having high strength of 1,150 MPa class or more and excellent durability can be manufactured.

The size of the carbide is preferable to be 1.00 µm or less, however, as the size of the carbide is finer, solid solution takes place more easily in heating of the quenching treatment and therefore the austenite grain size can be miniaturized further which is advantageous in improving the fatigue property in the atmosphere that is the durability of the spring. Accordingly, the size of the carbide is to be preferably 0.80 µm or less, more preferably 0.60 µm or less, and further more preferably 0.40 µm or less.

### (2) Manufacturing method for obtaining the metal structure of the present steel pipe

With respect to a method for miniaturizing the size of the carbide in the metal structure of the present invention into 1.00 µm or less, substantially, the heating temperature that is the annealing temperature in the final annealing step is preferable to be made higher than 750°C in the manufacturing method of the seamless steel pipe having steel composition stipulated in the present invention. Usually, in manufacturing a seamless steel pipe, spheroidizing annealing for spheroidizing the carbide in steel is performed in plural times in order to improve the workability, however, in the present invention, in the final annealing step out of the annealing, instead of the conventional spheroidizing annealing, high temperature annealing in which the annealing temperature is higher than 750°C to resolve the carbide is adopted. It is a matter of course that, when plural annealing steps are present, not only the final annealing step but also a part or all of the remaining annealing steps can be performed with the heating temperature thereof being a high temperature of higher than 750°C.

According to the related art, as described above, the heat treatment temperature is made 650-750°C, and the annealing effect saturates even at higher than 750°C which is not regarded to be preferable from economical point of view. However, in the steel composition of the object of the present invention and at the temperature range of 750°C or below, the carbide is not resolved during annealing and remains coarse. Therefore, in the present invention, by adoption of high temperature annealing that is different from the related art heating to 750°C or below, the carbide is fully resolved during annealing, and the coarse carbide is eliminated. Also, needless to say, the steel can be softened and the workability can be improved simultaneously also by this high temperature annealing. Further, in cooling thereafter, the carbide that has been solid-resolved is reprecipitated, however the size of the reprecipitated carbide becomes as fine as 1.00 µm or less, and a seamless steel pipe having the metal structure of the present invention is thus obtained.

When the final annealing temperature is higher than 750°C, the carbide is fully solid-resolved and the seamless steel pipe of the object of the present invention can be obtained, however when the final annealing time is too long, the surface property deteriorates such as decarburization during annealing, and therefore the annealing time is preferable to be short. In order to shorten the annealing time, to raise the heating temperature is effective, and solid solution of the carbide finishes in a short time when the heating temperature is high. From this viewpoint, the final annealing temperature is to be preferably 800°C or above, more preferably 850°C or above, further more preferably 900°C or above, and still more preferably 925°C or above. However, in annealing at a high temperature exceeding 1,000°C, a brittle hard structure such as bainite, martensite and the like is generated in the cooling process, and therefore the annealing temperature is to be preferably 1,000°C or below.

Also, it is preferable that cooling in the final annealing is by air cooling and the cooling rate is 0.5-10°C/sec.

Although the specific method for obtaining the metal structure characterized in the present invention is as described above, the overall method for manufacturing the present seamless steel pipe is as per the method disclosed in the Patent Literature 3 in principle. However, because the method for hot working and cold working and the condition thereof are not what are characterized by the present invention, working methods known conventionally may be adopted. With respect to hot working for example, the hot hydrostatic extrusion method proposed in the Patent Literatures 3, 4 may be adopted, and a rolling method is also applicable. With respect to the working condition thereof also, optional methods can be adopted.

A summary of a recommendable method in manufacturing the present seamless steel pipe will be described. First, a billet rolled by a blooming mill controlled to the composition range of the high-strength spring steel stipulated in the present invention is formed into a steel pipe billet with 143 mm outside diameter and 52 mm thickness for example.

The cylindrical billet formed is heated to 1,050-1.300°C, is thereafter subjected to hot working by a hot extrusion apparatus, and is made a steel pipe first intermediate. Next, the first intermediate is heated to 650-750°C to be subjected to the first intermediate annealing. The first intermediate having gone through the intermediate annealing is subjected to the first cold working by a Pilger mill rolling machine or a drawing machine, and is made a steel pipe second intermediate. Then, similarly to the case of the first intermediate, the steel pipe second intermediate is heated to 650-750°C to be subjected to the second intermediate annealing. Next, the steel pipe second intermediate having gone through the second intermediate annealing is subjected to the second cold working by the Pilger mill rolling machine or the drawing machine, and is made a steel pipe third intermediate. Further, the steel pipe third intermediate is heated to high temperature of higher than 750°C to 1,000°C to be subjected to final annealing. The steel pipe thus obtained is subjected to refining such as straightening, acid pickling and the like, and is eventually made a product (seamless steel pipe) with 16 mm outside diameter and 4 mm thickness for example. Also, the intermediate annealing after the hot working can be omitted, and, as described on application of the high temperature annealing of the present invention in respective annealing steps described above, high temperature annealing at higher than 750°C may be adopted according to the necessity also in the intermediate annealing steps other than the final annealing.

### [2] Composition of the present steel pipe

The composition of the steel pipe in relation with the present invention is as described above, and the optional elements described above are for further improvement of the property of the high-strength spring by adding selectively in addition to the elements described above. The reason and the like of stipulating the respective compositions will be described. Also, all of % means mass%.

### (1) C: 0.20-0.70%

C greatly affects the strength of the steel. In order to apply it to a high-strength spring, 0.20% or more should be added. On the other hand, when C is increased, brittle lens-shaped martensite is formed in quenching, and the fatigue property of the spring deteriorates. Therefore C content should be 0.70% or less.

Also, the lower limit of C content is to be more preferably 0.30% or more, further more preferably 035% or more, and still more preferably 0.40% or more, and the upper limit thereof is to be more preferably 0.65% or less, further more preferably 0.60% or less, and still more preferably 0.55% or less.

### (2) Si: 0.5-3.0%

It is known that temper softening resistance of Si is great at 500°C or below. Si is an element required for securing the strength of a spring that is subjected to tempering treatment at a comparatively low temperature, and should be added by 0.5% or more. On the other hand, increase of Si suppresses precipitation of cementite in tempering and increases residual _{Y}, however because the spring property deteriorates due to increase of the residual _{Y}, Si should be 3.0% or less.

Also, the lower limit of Si content is to be more preferably 1.0% or more, further more preferably 1.4% or more, and still more preferably 1.7% or more, and the upper limit thereof is to be more preferably 2.8% or less, further more preferably 2.6% or less, and still more preferably 2.4% or less.

### (3) Mn: 0.1-3.0%

Mn fixes a harmful element S into MnS and suppresses deterioration of toughness. For the purpose, Mn should be added by 0.1% or more. On the other hand, although Mn is solid-resolved in and stabilizes cementite, when a Mn ratio in cementite rises by increase of Mn, cementite is hardly resolved in heating. Therefore, Mn should be 3.0% or less.

Also, the lower limit of Mn content is to be more preferably 0.15% or more, further more preferably 0.20% or more, and still more preferably 0.30% or more, and the upper limit thereof is to be more preferably 2.5% or less, further more preferably 2.0% or less, and still more preferably 1.5% or less.

### (4) P: 0.030% or less (including 0%)

Because P is segregated on the grain boundary and deteriorates toughness, it is preferable to be as little as possible. In order to secure the property as a high-strength spring, it should be 0.030% or less.

Also, the upper limit of P content is to be more preferably 0.020% or less, further more preferably 0.015% or less, and still more preferably 0.010% or less.

### (5) S: 0.030% or less (including 0%)

Because S deteriorates toughness by grain boundary embrittlement and formation of coarse sulfide, it is preferable to be as little as possible. In order to secure the property as a high-strength spring, it should be controlled to 0.030% or less.

Also, the upper limit of S content is to be more preferably 0.020% or less, further more preferably 0.015% or less, and still more preferably 0.010% or less.

### (6) N: 0.02% or less (including 0%)

Although N forms nitride along with Al, Ti and the like and miniaturizes the structure to contribute to improvement of toughness, it deteriorates toughness when it is present in a solid-resolved state. Therefore, in the present invention, N content should be 0.02% or less.

Also, the upper limit of N content is to be more preferably 0.015% or less, further more preferably 0.010% or less, and still more preferably 0.005% or less.

### (7) Cr: 3.0% or less (not including 0%)

Cr has effects of securing the strength after tempering and improving corrosion resistance, and is an element advantageous in increasing the strength of the spring. In order to exert the effects, it is preferable to add Cr by 0.20% or more. On the other hand, although Cr is solid-resolved in and stabilizes cementite, when a Cr ratio in cementite rises by increase of Cr, cementite is hardly resolved in heating, and therefore, Cr should be 3.0% or less.

Also, the lower limit of Cr content is to be more preferably 0.40% or more, further more preferably 0.60% or more, and still more preferably 0.80% or more, and the upper limit thereof is to be more preferably 2.5% or less, further more preferably 2.0% or less, and still more preferably 1.5% or less.

### (8) B: 0.0150% or less (not including 0%)

B has effects of reducing segregation of P on the grain boundary and suppressing deterioration of toughness. In order to exert the effects, B is preferable to be added by 0.0010% or more. On the other hand, when B is added excessively, coarse carboboride is formed, drop of the strength and deterioration of the toughness are caused, and therefore B should be 0.0150% or less.

Also, the lower limit of B content is to be more preferably 0.0015% or more, further more preferably 0.0020% or more, and still more preferably 0.0025% or more, and the upper limit thereof is to be more preferably 0.0120% or less, further more preferably 0.0100% or less, and still more preferably 0.0070% or less.

### (9) Al: 0.10% or less (not including 0%)

Al fixes N as AlN, suppresses deterioration of toughness due to solid-resolved N, miniaturizes the structure, and contributes to improvement of toughness. In order to exert the effects, B is preferable to be added by 0.001% or more. However, similar to Si, Al has the effects of suppressing precipitation of cementite in tempering and increasing the residual _{Y}, and when Al content is increased, the spring property deteriorates due to increase of the residual _{Y}. Therefore, Al should be 0.10% or less.

Also, the lower limit of Al content is to be more preferably 0.002% or more, further more preferably 0.005% or more, and still more preferably 0.010% or more, and the upper limit thereof is to be more preferably 0.070% or less, further more preferably 0.050% or less, and still more preferably 0.030% or less.

### (10) V: 1.0% or less (not including 0%)

V forms carbonitride to contribute to miniaturization of the structure, and is effective in improving toughness. In order to exert the effects, V is preferable to be added by 0.020% or more. However, excessive addition thereof causes coarsening of the carobonitride and deterioration of toughness. From this viewpoint, V content should be 1.0% or less. Further, from the viewpoint of the cost reduction, minimal addition of V is preferable.

Also, the lower limit of V content is to be more preferably 0.030% or more, further more preferably 0.050% or more, and still more preferably 0.070% or more, and the upper limit thereof is to be more preferably 0.50% or less, further more preferably 0.30% or less, and still more preferably 0.20% or less.

### (11) Ti: 0.30% or less (not including 0%)

Ti forms carbonitride to contribute to miniaturization of the structure, and is effective in improving toughness. In order to exert the effects, Ti is preferable to be added by 0.020% or more. However, excessive addition thereof causes coarsening of the carobonitride and deterioration of toughness. From this viewpoint, Ti content should be 0.30% or less. Further, from the viewpoint of the cost reduction, minimal addition of V is preferable.

Also, the lower limit of Ti content is to be more preferably 0.030% or more, further more preferably 0.050% or more, and still more preferably 0.070% or more, and the upper limit thereof is to be more preferably 0.25% or less, further more preferably 0.20% or less, and still more preferably 0.15% or less.

### (12) Nb: 0.30% or less (not including 0%)

Nb forms carbonitride to contribute to miniaturization of the structure, and is effective in improving toughness. In order to exert the effects, Nb is preferable to be added by 0.02% or more. However, excessive addition thereof causes coarsening of the carobonitride and deterioration of toughness. From this viewpoint, Nb content should be 0.30% or less. Further, from the viewpoint of the cost reduction, minimal addition of Nb is preferable.

Also, the lower limit of Nb content is to be more preferably 0.030% or more, further more preferably 0.050% or more, and still more preferably 0.070% or more, and the upper limit thereof is to be more preferably 0.25% or less, further more preferably 0.20% or less, and still more preferably 0.15% or less.

### (13) Ni: 3.0% or less (not including 0%)

Ni is known to improve toughness by addition, has also an effect of suppressing decarburization in heating, and contributes to improvement of the spring durability. In order to exert the effects, Ni is preferable to be added by 0.1% or more. On the other hand, when Ni is added excessively, residual _{Y} is increased and the spring property is deteriorated. Therefore Ni content should be 3.0% or less. Further, from the viewpoint of the cost reduction, minimal addition of Ni is preferable.

Also, the lower limit of Ni content is to be more preferably 0.20% or more, further more preferably 0.40% or more, and still more preferably 0.60% or more, and the upper limit thereof is to be more preferably 2.5% or less, further more preferably 2.0% or less, and still more preferably 1.5% or less.

### (14) Cu: 3.0% or less (not including 0%)

Cu has an effect of suppressing decarburization in heating and contributes to improvement of the spring durability. In order to exert the effect, Cu is preferable to be added by 0.10% or more. On the other hand, when Cu is added excessively, residual _{Y} is increased and the spring property is deteriorated. Therefore Cu content should be 3.0% or less. Further, from the viewpoint of the cost reduction, minimal addition of Cu is preferable.

Also, the lower limit of Cu content is to be more preferably 0.20% or more, further more preferably 0.40% or more, and still more preferably 0.60% or more, and the upper limit thereof is to be more preferably 2.5% or less, further more preferably 2.0% or less, and still more preferably 1.5% or less.

### (15) Mo: 2.0% or less (not including 0%)

Mo has effects of reducing segregation of P on the grain boundary and suppressing deterioration of toughness. Also, Mo forms carbide to contribute to miniaturization of the structure and improves toughness. In order to exert the effects, Mo should be added by 0.2% or more. On the other hand, when Mo is added excessively, a conspicuous solidified and segregated zone is formed, and toughness is deteriorated. Therefore, Mo content should be 2.0% or less. Further, from the viewpoint of the cost reduction, minimal addition of Mo is preferable.

Also, the lower limit of Mo content is to be more preferably 0.30% or more, further more preferably 0.50% or more, and still more preferably 0.70% or more, and the upper limit thereof is to be more preferably 1.8% or less, further more preferably 1.6% or less, and still more preferably 1.4% or less.

### (16) Ca: 0.0050% or less (not including 0%)

Ca miniaturizes sulfide by adding a minute amount and contributes to improvement of toughness. In order to exert the effects, Ca is preferable to be added by 0.0001% or more. On the other hand, when Ca is added excessively, toughness is deteriorated reversely. Therefore, Ca content should be 0.0050% or less.

Also, the lower limit of Ca content is to be more preferably 0.0002% or more, further more preferably 0.0003% or more, and still more preferably 0.0004% or more, and the upper limit thereof is to be more preferably 0.0030% or less, further more preferably 0.0020% or less, and still more preferably 0.0010% or less.

### (17) Mg: 0.0050% or less (not including 0%)

Mg miniaturizes sulfide by adding a minute amount and contributes to improvement of toughness. In order to exert the effects, Mg is preferable to be added by 0.0001% or more. On the other hand, when Mg is added excessively, toughness is deteriorated adversely. Therefore, Mg content should be 0.0050% or less.

Also, the lower limit of Mg content is to be more preferably 0.0002% or more, further more preferably 0.0003% or more, and still more preferably 0.0004% or more, and the upper limit thereof is to be more preferably 0.0030% or less, further more preferably 0.0020% or less, and still more preferably 0.0010% or less.

### (18) REM: 0.020% or less (not including 0%)

REM miniaturizes sulfide by adding a minute amount and contributes to improvement of toughness. In order to exert the effects, REM is preferable to be added by 0.0001% or more. On the other hand, when REM is added excessively, toughness is deteriorated adversely. Therefore, REM content should be 0.020% or less.

Also, the lower limit of REM content is to be more preferably 0.0002% or more, further more preferably 0.0003% or more, and still more preferably 0.0004% or more, and the upper limit thereof is to be more preferably 0.010% or less, further more preferably 0.0050% or less, and still more preferably 0.0010% or less.

Further, in the present invention, REM means the whole of lanthanoids (15 elements from La to Ln) plus Sc and Y.

### (19) Zr: 0.10% or less (not including 0%)

Zr forms carbonitride to contribute to miniaturization of the structure, and is effective in improving toughness. In order to exert the effects, Zr is preferable to be added by 0.010% or more. However, excessive addition thereof causes coarsening of the carobonitride and deterioration of toughness. From this viewpoint, Zr content should be 0.10% or less. Further, from the viewpoint of the cost reduction, minimal addition of Zr is preferable.

Also, the lower limit of Zr content is to be more preferably 0.020% or more, further more preferably 0.025% or more, and still more preferably 0.030% or more, and the upper limit thereof is to be more preferably 0.080% or less, further more preferably 0.060% or less, and still more preferably 0.040% or less.

### (20) Ta: 0.10% or less (not including 0%)

Ta forms carbonitride to contribute to miniaturization of the structure, and is effective in improving toughness. In order to exert the effects, Ta is preferable to be added by 0.01% or more. However, excessive addition thereof causes coarsening of the carobonitride and deterioration of toughness. From this viewpoint, Ta content should be 0.10% or less. Further, from the viewpoint of the cost reduction, minimal addition of Ta is preferable.

Also, the lower limit of Ta content is to be more preferably 0.020% or more, further more preferably 0.025% or more, and still more preferably 0.030% or more, and the upper limit thereof is to be more preferably 0.080% or less, further more preferably 0.060% or less, and still more preferably 0.040% or less.

### (21) Hf: 0.10% or less (not including 0%)

Hf forms carbonitride to contribute to miniaturization of the structure, and is effective in improving toughness. In order to exert the effects, Hf is preferable to be added by 0.010% or more. However, excessive addition thereof causes coarsening of the carobonitride and deterioration of toughness. From this viewpoint, Hf content should be 0.10% or less. Further, from the viewpoint of the cost reduction, minimal addition of Hf is preferable.

Also, the lower limit of Hf content is to be more preferably 0.020% or more, further more preferably 0.025% or more, and still more preferably 0.030% or more, and the upper limit thereof is to be more preferably 0.080% or less, further more preferably 0.060% or less, and still more preferably 0.040% or less.

### [3] Example

In order to attest the effects of the present invention, the experiment described below was carried out.

### (1) Manufacturing a seamless pipe

Each of the steel pipe billets with 143 mm outside diameter and 50 mm thickness having a composition shown in Table 1 was heated to 1,000°C and hot worked by a hot hydrostatic apparatus into a raw pipe with 60 mm outside diameter and 15 mm thickness, and was further cold worked by a drawing machine to manufacture a steel pipe with 16 mm mm outside diameter and 4 mm thickness. These steel pipes were subjected to final annealing at a temperature (annealing temperature) of 700-950°C as shown in Table 2, a refining treatment such as acid pickling and the like was performed, and product seamless steel pipes were obtained. Also, cooling in the final annealing was performed by air cooling, and the cooling rate thereof was made 1.5°C/s.

### (2) Evaluation of carbide size of steel pipe

Each of the seamless steel pipes thus obtained was cut and embedded in a resin so as to make an optional cross-sectional surface thereof a surface for observation, was subjected to wet polishing, and was finished into a mirror surface. Thereafter etching was performed with picral, and the metal structure was observed using a SEM. The point of observation was the center part of the pipe thickness (t/2 position), and five fields of view were photographed at 3,000-5,000 magnifications. The observed photograph was image-treated, the equivalent circles of the carbide (cementite) in the metal structure were approximated, and the maximum value thereof was obtained. The value was made the size of the carbide, and was shown in Table 2.

### (3) Quenching treatment of steel pipe

In order to grasp the property in the case the steel pipe was made into a hollow spring, each of the seamless pipes was subjected to quenching treatment (quenching, tempering). Quenching was performed by heating to 1,000-1,150°C by high frequency heating, being held for 10 seconds, and thereafter being water-cooled. Also, tempering was performed by holding for 60 min at 400°C using an electric furnace, and thereafter being air-cooled.

### (4) Endurance test of steel pipe after quenching treatment

Each of the seamless steel pipes subjected to the quenching treatment was subjected to an endurance test in the atmosphere with the maximum load stress of 1,150 MPa and 1,200 MPa. Lifetime of 100,000 times or more was made a passing line, evaluation was performed with less than 100,000 times being marked with × (failed), with 100,000 times or more and less than 300,000 times being marked with Δ (passed), with 300,000 times or more and less than 500,000 times being marked with ○ (passed), and with 500,000 times or more being marked with ⊚ (passed). The result of the endurance test was shown in Table 2.

### (5) Examination of prior austenite grain size after quenching treatment

Each of the seamless steel pipes after the quenching treatment was cut and embedded in a resin so as to make an optional cross-sectional surface thereof a surface for observation, was subjected to wet polishing, and was finished into a mirror surface. Thereafter etching was performed with picric acid saturated aqueous solution to produce the prior austenite grain boundary, and the surface was observed using an optical microscope. The point of observation was the center part of the pipe thickness (t/2 position), and five fields of view were photographed at 400 magnifications. The average value of the prior austenite grain size was obtained by a cutting method from the photograph of observation. The values of the prior austenite grain size were shown in Table 2.

### (6) Examination of unresolved carbide after quenching treatment

Each of the seamless steel pipes after the quenching treatment was cut and embedded in a resin so as to make an optional cross-sectional surface thereof a surface for observation, was subjected to wet polishing, and was finished into a mirror surface. Thereafter etching was performed with picral, the metal structure was observed using a SEM, and presence/absence of the unresolved carbide was examined. The result thereof was also shown in Table 2 similarly.

From the result of Table 2, the seamless steel pipes of the present invention examples have been found out to have superior quality compared to the seamless steel pipes of the comparative examples, that is, the strength thereof after quenching treatment being 1,150 MPa class or above and having the fatigue property in the atmosphere to stand the endurance test of 100,000 times or more, and to have high strength and durability, and can be advantageously applied as the seamless steel pipe for a high-strength hollow spring. Also, the reasons why respective comparative examples in Table 2 cannot secure the strength and durability objected in the present invention are that the steel Nos. A1-1, A5-1, A6-1, A11-1, A15-1, A28-1, A29-1, A30-1, A32-1, A34-1, A35-1, A36-1 and A46-1 do not satisfy the range of the steel composition stipulated in the present invention respectively, the steel Nos. A7-2, A7-3, A14-2, A14-3, A18-2, A23-2, A37-2, A37-3, A42-2 and A42-3 do not satisfy the size of the carbide stipulated in the present invention, and the steel Nos. A16-1 and A35-1 do not satisfy both of the steel composition and the size of the carbide stipulated in the present invention.
[Table 1]

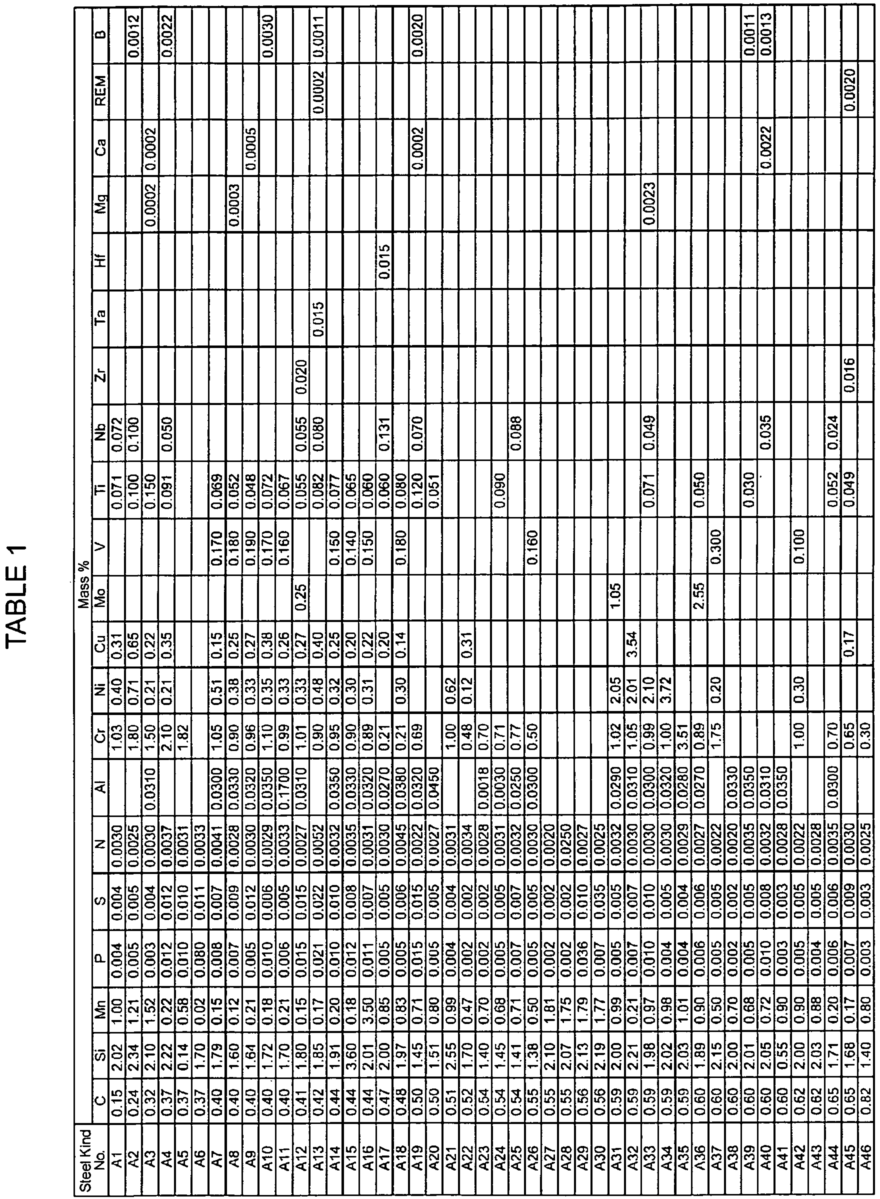

[Table 2]

**TABLE 2**

| Steel Kind No. | Steel No. | Annealing temperature | Carbide size | Heating temperature of quenching | Prior austenite grain size | Presence/ absence of unresolved carbide | Endurance test result | | Remarks |
|---|---|---|---|---|---|---|---|---|---|
| | | °C | *µ*m | °C | *µ*m | | 1150MPa | 1200MPa | |
| A1 | A1-1 | 925 | 0.36 | 1000 | 6.7 | ○ | × | - | Comparative example |
| A2 | A2-1 | 925 | 0.38 | 1000 | 7.1 | ○ | ○ | ○ | Invention example |
| A3 | A3-1 | 925 | 0.35 | 1000 | 6.8 | ○ | ○ | ○ | Invention example |
| A4 | A4-1 | 925 | 0.27 | 1000 | 6.8 | ○ | ⊚ | ⊚ | Invention example |
| A5 | A5-1 | 925 | 0.23 | 1000 | 18.5 | ○ | × | - | Comparative example |
| A6 | A6-1 | 925 | 0.32 | 1000 | 13.4 | ○ | × | - | Comparative example |
| A7 | A7-1 | 925 | 0.24 | 1000 | 10.3 | ○ | ⊚ | ⊚ | Invention example |
| | A7-2 | 700 | 1.20 | 1000 | 9.7 | × | × | - | Comparative example |
| | A7-3 | 700 | 1.24 | 1150 | 26.0 | ○ | × | - | Comparative example |
| | A7-4 | 775 | 0.89 | 1000 | 7.9 | ○ | ⊚ | ○ | Invention example |
| | A7-5 | 825 | 0.70 | 1000 | 6.9 | ○ | ⊚ | ⊚ | Invention example |
| | A7-6 | 875 | 0.54 | 1000 | 6.5 | ○ | ⊚ | ⊚ | Invention example |
| | A7-7 | 950 | 0.17 | 1000 | 7.5 | ○ | ⊚ | ⊚ | Invention example |
| A8 | A8-1 | 925 | 0.22 | 1000 | 7.7 | ○ | ○ | ○ | Invention example |
| A9 | A9-1 | 925 | 0.34 | 1000 | 6.7 | ○ | ⊚ | ⊚ | Invention example |
| A10 | A10-1 | 925 | 0.34 | 1000 | 9.8 | ○ | ⊚ | ⊚ | Invention example |
| A11 | A11-1 | 925 | 0.32 | 1000 | 7.0 | ○ | × | - | Comparative example |
| A12 | A12-1 | 925 | 0.39 | 1000 | 9.8 | ○ | ⊚ | ⊚ | Invention example |
| A13 | A13-1 | 925 | 0.25 | 1000 | 9.4 | ○ | ○ | ○ | Invention example |
| A14 | A14-1 | 925 | 0.39 | 1000 | 9.8 | ○ | ⊚ | ⊚ | Invention example |
| | A14-2 | 700 | 1.10 | 1000 | 9.0 | × | × | - | Comparative example |
| | A14-3 | 700 | 1.14 | 1150 | 28.0 | ○ | × | - | Comparative example |
| | A14-4 | 775 | 0.89 | 1000 | 9.3 | ○ | ⊚ | ⊚ | Invention example |
| | A14-5 | 825 | 0.72 | 1000 | 7.3 | ○ | ⊚ | ⊚ | Invention example |
| | A14-6 | 875 | 0.44 | 1000 | 6.7 | ○ | ⊚ | ⊚ | Invention example |
| | A14-7 | 950 | 0.16 | 1000 | 9.0 | ○ | ⊚ | ⊚ | Invention example |
| A15 | A15-1 | 925 | 0.36 | 1000 | 9.2 | ○ | × | - | Comparative example |
| A16 | A16-1 | 925 | 1.15 | 1000 | 5.7 | × | × | - | Comparative example |
| A17 | A17-1 | 925 | 0.33 | 1000 | 10.9 | ○ | ⊚ | ⊚ | Invention example |
| A18 | A18-1 | 925 | 0.37 | 1000 | 9.0 | O | ⊚ | ⊚ | Invention example |
| | A18-2 | 700 | 1.04 | 1000 | 10.1 | × | × | - | Comparative example |
| | A18-3 | 775 | 0.80 | 1000 | 10.9 | ○ | ○ | ○ | Invention example |
| | A18-4 | 825 | 0.71 | 1000 | 9.5 | ○ | ⊚ | ⊚ | Invention example |
| | A18-5 | 875 | 0.44 | 1000 | 7.3 | ○ | ⊚ | ⊚ | Invention example |
| | A18-6 | 950 | 0.17 | 1000 | 8.4 | ○ | ⊚ | ⊚ | Invention example |
| A19 | A19-1 | 925 | 0.36 | 1000 | 9.1 | ○ | ⊚ | ⊚ | Invention example |
| A20 | A20-1 | 925 | 0.35 | 1000 | 6.3 | ○ | ⊚ | ⊚ | Invention example |
| A21 | A21-1 | 925 | 0.34 | 1000 | 18.5 | ○ | ⊚ | ○ | Invention example |
| A22 | A22-1 | 925 | 0.38 | 1000 | 18.2 | ○ | ⊚ | ○ | Invention example |
| A23 | A23-1 | 925 | 0.35 | 1000 | 14.0 | ○ | ⊚ | ○ | Invention example |
| | A23-2 | 700 | 1.09 | 1000 | 17.4 | × | × | - | Comparative example |
| | A23-3 | 775 | 0.86 | 1000 | 14.7 | ○ | ○ | Δ | Invention example |
| | A23-4 | 825 | 0.74 | 1000 | 16.7 | ○ | ○ | Δ | Invention example |
| | A23-5 | 875 | 0.55 | 1000 | 13.3 | ○ | ○ | ○ | Invention example |
| | A23-6 | 950 | 0.18 | 1000 | 16.2 | ○ | ⊚ | ○ | Invention example |
| A24 | A24-1 | 925 | 0.25 | 1000 | 7.9 | ○ | ⊚ | ○ | Invention example |
| A25 | A25-1 | 925 | 0.22 | 1000 | 9.9 | ○ | ⊚ | ⊚ | Invention example |
| A26 | A26-1 | 925 | 0.32 | 1000 | 5.6 | ○ | ⊚ | ⊚ | Invention example |
| A27 | A27-1 | 925 | 0.39 | 1000 | 16.3 | ○ | ○ | Δ | Invention example |
| A28 | A28-1 | 925 | 0.32 | 1000 | 13.2 | ○ | × | - | Comparative example |
| A29 | A29-1 | 925 | 0.38 | 1000 | 17.0 | ○ | × | - | Comparative example |
| A30 | A30-1 | 925 | 0.24 | 1000 | 17.9 | ○ | × | - | Comparative example |
| A31 | A31-1 | 925 | 0.28 | 1000 | 8.7 | ○ | ⊚ | ⊚ | Invention example |
| A32 | A32-1 | 925 | 0.38 | 1000 | 5.7 | ○ | × | - | Comparative example |
| A33 | A33-1 | 925 | 0.39 | 1000 | 6.9 | ○ | ⊚ | ⊚ | Invention example |
| A34 | A34-1 | 925 | 0.32 | 1000 | 14.1 | ○ | × | - | Comparative example |
| A35 | A35-1 | 925 | 1.02 | 1000 | 17.3 | × | × | - | Comparative example |
| A36 | A36-1 | 925 | 0.33 | 1000 | 8.4 | ○ | × | - | Comparative example |
| A37 | A37-1 | 925 | 0.26 | 1000 | 9.4 | ○ | ⊚ | ⊚ | Invention example |
| | A37-2 | 700 | 1.15 | 1000 | 8.0 | × | × | - | Comparative example |
| | A37-3 | 700 | 1.08 | 1150 | 25.1 | ○ | × | - | Comparative example |
| | A37-4 | 775 | 0.82 | 1000 | 7.0 | ○ | ⊚ | ○ | Invention example |
| | A37-5 | 825 | 0.73 | 1000 | 9.4 | ○ | ⊚ | ⊚ | Invention example |
| | A37-6 | 875 | 0.54 | 1000 | 5.1 | ○ | ⊚ | ⊚ | Invention example |
| | A37-7 | 950 | 0.17 | 1000 | 7.6 | ○ | ⊚ | ⊚ | Invention example |
| A3B | A38-1 | 925 | 0.32 | 1000 | 12.2 | ○ | ⊚ | ○ | Invention example |
| A39 | A39-1 | 925 | 0.38 | 1000 | 7.2 | ○ | ⊚ | ⊚ | Invention example |
| A40 | A40-1 | 925 | 0.22 | 1000 | 5.7 | ○ | ⊚ | ⊚ | Invention example |
| A41 | A41-1 | 925 | 0.37 | 1000 | 17.5 | ○ | ○ | ○ | Invention example |
| A42 | A42-1 | 925 | 0.23 | 1000 | 8.2 | ○ | ⊚ | ⊚ | Invention example |
| | A42-2 | 700 | 1.23 | 1000 | 8.0 | × | × | - | Comparative example |
| | A42-3 | 700 | 1.25 | 1150 | 28.6 | ○ | × | - | Comparative example |
| | A42-4 | 775 | 0.80 | 1000 | 6.6 | ○ | ⊚ | ○ | Invention example |
| | A42-5 | 825 | 0.72 | 1000 | 5.2 | ○ | ⊚ | ⊚ | Invention example |
| | A42-6 | 875 | 0.45 | 1000 | 10.0 | ○ | ⊚ | ⊚ | Invention example |
| | A42-7 | 950 | 0.15 | 1000 | 8.3 | ○ | ⊚ | ⊚ | Invention example |
| A43 | A43-1 | 925 | 0.25 | 1000 | 12.0 | ○ | ○ | Δ | Invention example |
| A44 | A44-1 | 925 | 0.29 | 1000 | 6.8 | ○ | ⊚ | ⊚ | Invention example |
| A45 | A45-1 | 925 | 0.23 | 1000 | 9.5 | ○ | ⊚ | ⊚ | Invention example |
| A46 | A46-1 | 925 | 0.29 | 1000 | 17.9 | ○ | × | - | Comparative example |

The seamless steel pipe of the present invention is useful in manufacturing a hollow shape suspension spring and the like used for automobiles.

## Claims

1. A seamless steel pipe for a high-strength hollow spring, comprising:
0.20 to 0.70 mass% of C, 0.5 to 3.0 mass% of Si, 0.1 to 3.0 mass% of Mn, 0.030 mass% or less (including 0%) of P, 0.030 mass% or less (including 0%) of S, 0.02 mass% or less (including 0%) of N, and optionally
one element or more selected from a group consisting of 3.0 mass% or less (not including 0%, hereinafter the same) of Cr, 0.0150 mass% or less of B, 0.10 mass% or less of Al, 1.0 mass% or less of V, 0.30 mass% or less of Ti, 0.30 mass% or less of Nb, 3.0 mass% or less of Ni, 3.0 mass% or less of Cu, 2.0 mass% or less of Mo, 0.0050 mass% or less of Ca, 0.0050 mass% or less of Mg, 0.020 mass% or less of REM, 0.10 mass% or less of Zr, 0.10 mass% or less of Ta, and 0.10 mass% or less of Hf, with the remainder being Fe and unavoidable impurities, wherein carbide has an equivalent circle diameter of 1.00 µm or less.

## Patentansprüche

1. Nahtloses Stahlrohr für eine hochfeste Hohlfeder, umfassend:
0,20 bis 0,70 Masse-% von C, 0,5 bis 3,0 Masse-% von Si, 0,1 bis 3,0 Masse-% von Mn, 0,030 Masse-% oder weniger (einschließlich 0%) von P, 0,030 Masse-% oder weniger (einschließlich 0%) von S, 0,02 Masse-% oder weniger (einschließlich 0%) von N und gegebenenfalls
ein Element oder mehrere, ausgewählt aus einer Gruppe, bestehend aus 3,0 Masse-% oder weniger (nicht eingeschlossen 0%, nachfolgend das Gleiche) von Cr, 0,0150 Masse-% oder weniger von B, 0,10 Masse-% oder weniger von Al, 1,0 Masse-% oder weniger von V, 0,30 Masse-% oder weniger von Ti, 0,30 Masse-% oder weniger von Nb, 3,0 Masse-% oder weniger von Ni, 3,0 Masse-% oder weniger von Cu, 2,0 Masse-% oder weniger von Mo, 0,0050 Masse-% oder weniger von Ca, 0,0050 Masse-% oder weniger von Mg, 0,020 Masse-% oder weniger von REM, 0,10 Masse-% oder weniger von Zr, 0,10 Masse-% oder weniger von Ta und 0,10 Masse-% oder weniger von Hf, wobei der Rest aus Fe und unvermeidbaren Verunreinigungen besteht, wobei Carbid einen äquivalenten Kreisdurchmesser von 1,00 µm oder weniger aufweist.

## Revendications

1. Tube en acier sans soudure pour un ressort creux à haute résistance, comprenant :
0.20 à 0.70% en masse de C, 0.5 à 3.0% en masse de Si, 0.1 à 3.0% en masse de Mn, 0.030% en masse ou moins (incluant 0%) de P, 0.030% en masse ou moins (incluant 0%) de S, 0.02% en masse ou moins (incluant 0%) de N, et optionnellement un élément ou plus sélectionné parmi le groupe consistant en 3.0% en masse ou moins (excluant 0%, ci-après de même) de Cr, 0.0150% en masse ou moins de B, 0.10% en masse ou moins d'Al, 1.0% en masse ou moins de V, 0.30% en masse ou moins de Ti, 0.30% en masse ou moins de Nb, 3.0% en masse ou moins de Ni, 3.0% en masse ou moins de Cu, 2.0% en masse ou moins de Mo, 0.0050% en masse ou moins de Ca, 0.0050% en masse ou moins de Mg, 0.020% en masse ou moins d'un métal terre rare, 0.10% en masse ou moins de Zr, 0.10% en masse ou moins de Ta, et 0.10% en masse ou moins de Hf, le reste étant du fer et d'inévitables impuretés, dans lequel un carbure a un diamètre de cercle équivalent de 1.00 µm ou moins.
